# EUROPÄISCHE PATENTSCHRIFT

(11) **EP 1 923 245 B1**
(45) Veröffentlichungstag und Bekanntmachung des Hinweises auf die Patenterteilung: **16.04.2014**
(21) Anmeldenummer: 07015741.7
(22) Anmeldetag: 10.08.2007
(51) Int. Cl.: B60J 7/00

(54) **Dachfensterrollo**
Roller blind for roof
Store à enrouleur de toit

(30) Priorität: 20.11.2006 DE 102006054881
(43) Veröffentlichungstag der Anmeldung: 21.05.2008
(73) Patentinhaber: BOS GmbH & Co. KG, 73760 Ostfildern (DE)
(72) Erfinder: Hansen, Melf, 75053 Gondelsheim (DE); Stark, Wolfgang, 73770 Denkendorf (DE)
(74) Vertreter: Rüger, Barthelt & Abel

(56) Entgegenhaltungen:
- EP-A- 1 006 012
- WO-A-2006/053520
- DE-A1-102006 015 668
- DE-U1-202004 015 857
- DE-U1-202006 019 930

## Beschreibung

Bei Dachfenstern von Kraftfahrzeugen besteht die Notwendigkeit zur Abschattung. Praktisch unter jedem beliebigen Sonnenstandswinkel kann Licht über das Dachfenster in den Innenraum des PKW fallen und den Innenraum aufheizen. Um den Aufheizvorgang zu verlangsamen werden Dachfensterrollos verwendet. Sie sollen gleichzeitig bei geöffnetem Dachfenster Schatten spenden.

Bei Dachfensterrollos von Kraftfahreugen besteht das Problem, dass die ausgezogene Rollobahn aufgrund ihres Eigengewichtes zwischen den Führungsschienen und zwischen dem Zugstab und der Wickelwelle muldenartig durchhängt. Es wurde bereits versucht dem Durchhängen entgegenzuwirken, indem die Rollobahnkanten mit einem dünnen Stahlband bewehrt werden. Das Stahlband läuft in speziellen Führungsschienen, die die Rollobahn zwischen den Führungsschienen in Querrichtung gespannt halten.

Der Aufwand, die Stahlbänder an den Rollobandkanten zu befestigen, ist erheblich. Außerdem zeigt dieses Rollo den Nachteil, dass der Ballen auf der Wickelwelle im Bereich der Stahlbänder dicker ist und im Durchmesser schneller anwächst als im Bereich dazwischen, was zum Faltenwurf führt. Diese Falten fixieren sich im Laufe der Zeit und sehen bei ausgezogener Rollobahn unschön aus.

Die EP 1 006 012 A2 zeigt ein Dachfensterrollo, bei dem Spriegel verwendet werden, um die Rollobahn im horizontalen Bereich gespannt zu halten. Im Einzelnen weist das bekannte Dachfensterrollo eine Wickelwelle auf, an der mit einer Kante die Rollobahn befestigt ist. Die Rollobahn weist mehrere parallel zu der Wickelwelle ausgerichtete schlauchförmige Taschen auf, in denen Spriegel strecken, die endseitig in zwei Führungsschienen geführt sind, die parallel zu den Seitenkanten des Dachfensters verlaufen. Die Führungsschienen enthalten Führungsnuten, deren Schlitze jedoch nicht aufeinander zu zeigen, sondern ein wenig geneigt in Richtung auf den Scheitel des Dachs. Dadurch werden die Spiegel, sobald sie in den Führungsschienen laufen, bogenförmig gespannt und spannen entsprechend auch die Rollobahn tonnenförmig durch.

Im aufgewickelten Zustand liegen dagegen die Spiegel gestreckt gerade, weshalb an der Einlaufseite jeder Führungsschiene eine Schräge vorgesehen ist, um die Spriegel bei der Bewegung in Ausfahrrichtung allmählich von der gestreckten Position in die bombierte Position zu bringen.

Ausgehend hiervon ist es Aufgabe der Erfindung ein Dachfensterrollo zu schaffen, das diesen Nachteil nicht aufweist.

Das neue Dachfensterrollo für Kraftfahrzeuge weist eine drehbar gelagerte Wickelwelle auf, an der mit einer Kante eine Rollobahn mit rechteckigen Zuschnitt befestigt ist. Die andere Kante der Rollobahn ist mit einem Zugstab verbunden, der endseitig in zwei zueinander parallelen Führungsschienen geführt ist.

Jede Führungsschiene enthält eine Führungsnut, die sich im Querschnitt gesehen aus einer Nutenkammer und einem Nutenschlitz zusammensetzt. Der Nutenschlitz der einen Führungsschiene zeigt in Richtung auf die gegenüberliegende Führungsschiene. Da die Weite der Nutenkammer größer ist als die Weite des Nutenschlitzes entsteht eine hinterschnittene Führungsnut.

Der Zuschnitt der Rollobahn ist so gewählt, dass die Rollobahnbreite größer ist als es dem Abstand der Führungsschienen voneinander entspricht. Unter Zuhilfenahme einer schrägen Einlaufkante an jeder Führungsschiene in Verbindung mit Kedergliedern wird die Rollobahn am Einlaufende jeder Führungsschiene schlaufen- oder schlauchartig um das Kederglied umgeschlagen. Innerhalb der Führungsschiene liegt dadurch die Rollobahn um das Kederglied herum. Unmittelbar außerhalb des Führnutenschlitzes kommt eine doppellagige Konfiguration zustande.

Somit umschlingt innerhalb jeder Führungsschiene die Rollobahn das dort vorhandene Kederglied. Zufolge der Umschlingung von nahezu 180° entsteht eine Haltekraft, die ein Durchsacken der Rollobahn zwischen den Führungsschienen vermeidet. Die Rollobahn bleibt zwischen den Führungsschienen weitgehend gestrafft.

Die hierzu verwendeten Kederglieder sind hinreichend torsionssteif.

Beim Einfahren der Rollobahn wird diese Umschlingung des Kedergliedes am Ende der Führungsschiene rückgängig gemacht und die Rollobahn liegt glatt und flach auf der Wickelwelle auf.

Um die erforderliche Querspannung in der Rollobahn aufrecht zu erhalten sind bei dem erfindungsgemäßen Rollo keine Verdickungen erforderlich um die Rollobahn in den Führungsschienen zu halten. Die erforderlichen, längs den Kanten verlaufenden "Verdickungen" werden dynamisch beim Ausfahren der Rollobahn erzeugt und ebenso dynamisch beim Einfahren wieder beseitigt. Der auf der Wickelwelle erzeugte Ballen oder Wickel aus Rollobahnmaterial ist vollkommen glatt und zylindrisch. Die Rollobahn kann als gleichmäßig dicke Folie aufgewickelt werden. Es besteht nicht die Gefahr, beim Aufwickeln Falten im Ballen zu bekommen, die später hässliche Changierungen erzeugen.

Außerdem ist die Herstellung des Rollos sehr einfach, weil es genügt, einen einfachen rechteckigen Rollobahnzuschnitt zu erzeugen. Die Kanten müssen nicht in besonderer Weise mit besonderen Elementen versehen werden.

Günstige Kräfteverhältnisse in der Rollobahn ergeben sich, wenn die Einlaufkante einen angenähert schraubenförmigen Verlauf aufweist.

Die Einlaufkante kann an der Außenseite des Nutenschlitzes beginnen und an dieser Stelle den größten Abstand von der Wickelwelle haben. Von dieser Stelle aus kann die Einlaufkante in Richtung auf die Wickelwelle zu einer von dem Nutenschlitz abliegenden Stelle der Nutenkammer laufen, derart, dass in der Nähe der Wickelwelle von dem Nutenschlitz lediglich eine Seite und die Hälfte der Nutenkammer noch vorhanden sind.

Gegebenenfalls kann es von Vorteil sein, wenn das Kederglied bezüglich der im Betrieb auftretenden Kräfte torsionssteif ist. Dadurch wird verhindert, dass beim Einlaufen der Rollobahn in die Führungsschiene auftretende Kräfte das Kederglied tordieren können. Oder aber Belastungsspitzen in der Rollobahn infolge von Schwingungen lokal das Kederglied drehen könnten, was zu einem herausziehen der Rollobahn aus der Führungsschiene führen könnte.

Zweckmäßig ist es, wenn die Kederglieder auf dem Außenumfang rau sind, um eine möglichst gute Reibung zwischen der Rollobahn und dem Kederglied zu erzielen.

Die raue Oberfläche kann durch radial wegstehende Haare oder Borsten gebildet sein. Es kann das betreffende Kederglied im Durchmesser variabel sein, um sich selbstätig auf die Platzverhältnisse innerhalb der Führungsschiene einzustellen, wenn um das Kederglied die Rollobahn herumliegt.

Insgesamt geringe Belastungen für die Rollobahn können sich ergeben, wenn das Kederglied einen Kreisquerschnitt hat und somit an dem Kreisquerschnitt einer vorzugsweise zylindrischen Nutenkammer angepasst ist.

Ein herausziehen des Kederglieds aus der Führungsschiene wird mit Sicherheit vermieden, wenn das Kederglied einen Außendurchmesser aufweist, der in jedem Falle größer ist als die Weite des Nutenschlitzes.

Die Kederglieder können gleichzeitig auch als Antriebsglieder für den Zugstab verwendet werden, wenn das Dachrollo nicht manuell sondern elektrisch betätigt werden soll.

Die Kederglieder können hierzu als biegeelastische Zahnstangen ausgebildet sein, die vorzugsweise mit einer Rundum-Schrägverzahnung versehen sind.

Der Getriebemotor kann hierzu auf seiner Ausgangswelle ein Stirnzahnrad mit einer Verzahnung tragen, die zu der Verzahnung des Kederglieds komplementär ist.

Beim Ausfahren der Rollobahn tritt an der schrägen Einlaufkante der Führungsschiene eine kontinuierlich fortschreitende Umformung an der betreffenden Seite der Rollobahn auf. Die ursprünglich flach liegende Rollobahn wird, ähnlich wie bei einem Saum an einem Textilstück, kontinuierlich umgeschlagen, wobei gleichzeitig in dem Umbug das Kederglied zu liegen kommt. An diese Verhältnisse muss das Material der Rollobahn angepasst sein, in dem Sinne, das es keinen Faltenwurf zeigt.

Es sollte hierzu keine Konsistenz haben, die hinsichtlich des Falt- und Biegeverhaltens, Papier ähnelt. Vielmehr sollte die Rollobahn in ihrem Umbugverhalten einem Gewebe ähneln.

Eine solche Rollobahn kann beispielsweise aus einer gelochten Kunststofffolie oder einem Kettengewirke bestehen.

Die Führungsschiene kann auch aus biegesteifen Material bestehen oder innerhalb der Karosserie biegesteif befestigt sein.

Im übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, das eine Reihe von Abwandlungen möglich sind.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes, bei der praktischen Ausführung gegebenenfalls vorhandene Detail.
- Fig. 1: zeigt einen PKW in einer Draufsicht auf das Dach, unter Veranschaulichung eines Dachfensters;
- Fig. 2: veranschaulicht in einer Prinzipedarstellung den grundsätzlichen Aufbau des Dachfensterrollos nach Figur 1 und
- Fig. 3: zeigt in einer schematischen Darstellung ein elektrisches Antriebskonzept für das Dachfensterrollo nach Fig. 2.

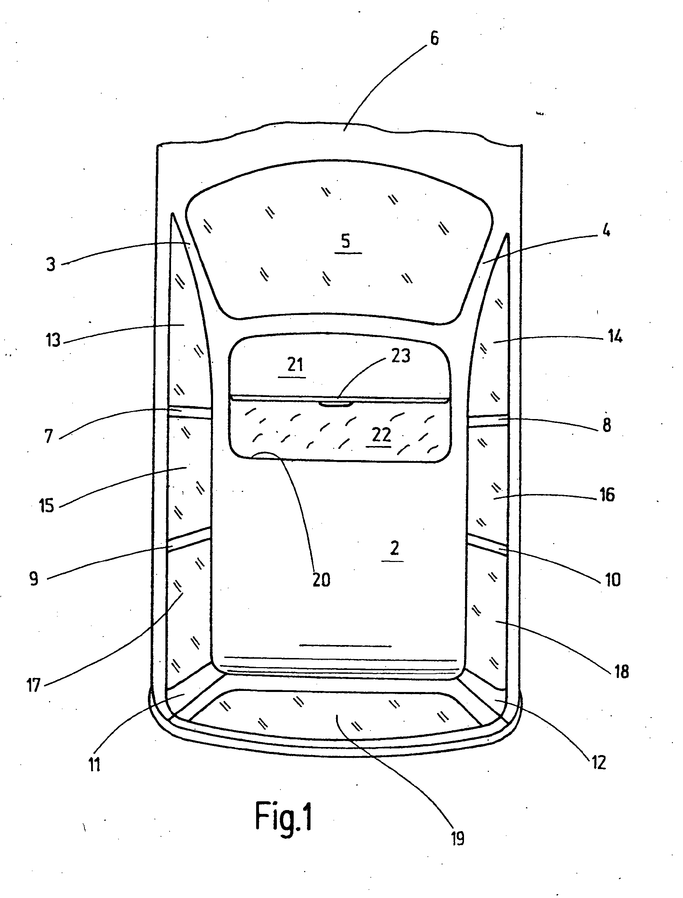

Fig. 1 zeigt in einer schematisierten Draufsicht einen PKW 1. Zu erkennen ist sein Dach 2, von dem an der Vorderkante zwei A-Säulen 3 und 4 ausgehen. Zwischen den beiden A-Säulen 3 und 4 befindet sich eine Windschutzscheibe 5, die an der Unterkante in eine Kühlerhaube 6 übergeht. Nach hinten folgen auf die beiden A-Säulen 3 und 4 B-Säulen 7 und 8, C-Säulen 9 und 10 sowie D-Säulen 11 und 12. Zwischen den Säulen 3 .. 12 sind vordere Seitenscheiben 13, 14, hintere Seitenscheiben 15, 16 und Seitenscheiben des Kofferraums 17, 18 zu erkennen. Den Abschluss bildet eine Heckscheibe 19, die zwischen den beiden D-Säulen 11, 12 vorhanden ist.

Im vorderen Bereich des Daches 2 ist angrenzend an die Frontscheibe 5 eine Dachöffnung 20 enthalten, in der sich ein Dachfenster 21 befindet. Das Dachfenster 21 kann ein Glasschiebedach oder ein Glashubdach sein. Es kann sich um ein Glasdach handeln, das beide Funktionen miteinander verbindet.

Unterhalb des Glasdaches 21 ist eine teilweise ausgezogenen Rollobahn 22 zu erkennen. Die Rollobahn 22 ist an einem Auszugsprofil 23 befestigt. Die Rollobahn 22 und das Auszugsprofil 23 gehören zu einem manuell betätigten Dachfensterrollo 24.

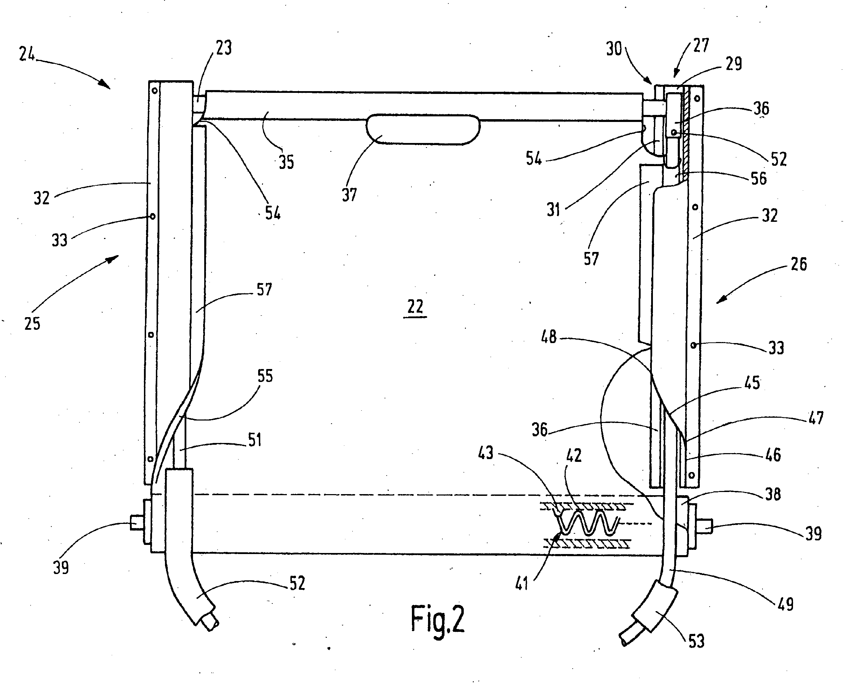

Fig. 2 zeigt den grundsätzlichen Aufbau des Dachfensterrollos 24.

Gemäß Fig. 2 gehören zu dem Dachfensterrollo 21 zwei seitlich des Dachfensters 21 vorgesehene Führungsschienen 25 und 26. Die Führungsschienen 25, 26 verlaufen parallel zueinander.

Die Führungsschienen 25 und 26 sind spiegelbildlich zueinander angeordnet und folgen dem Verlauf der Seitenkante des Dachfensters 25.

Da die beiden Führungsschienen 25 und 26 untereinander gleich sind, genügt die Erläuterung der inneren Struktur der Führungsschiene 26. Die Erläuterung gilt sinngemäß für die Führungsschiene 25.

In der Führungsschiene 26 befindet sich eine hinterschnittene Führungsnut 27, deren Profil sich aus einer Nutenkammer 29 und einem Nutenschlitz 30 zusammensetzt. Von dem Nutenschlitz 30 ist im aufgebrochen gezeichneten Bereich eine der beiden Seitenwände 31 zu erkennen. Die Weite des Schlitzes 30 ist kleiner als die lichte Weite der Nutenkammer 29, wodurch sich die hinterschnittene Struktur ergibt.

Die Führungsschienen 25, 26 tragen an ihrer Rückseite Befestigungsflansche 32 mit Befestigungsöffnungen 33. Hiermit sind die Führungsschienen 25, 26 unterhalb des Dachs 2 in dem PKW zu befestigen.

Die beiden Führungsschienen 25 und 26 dienen dazu, den Zugstab 23 zu führen, an dem mit einer Kante die Rollobahn 22 befestigt ist. Der mittlere Teil des Zugstabs 23 sitzt beispielsweise in einer an der Rollobahn 22 ausgebildeten schlauchförmigen Schlaufe 35.

Der Zugstab 23 ragt endseitig durch den Nutenschlitz 30 in die Führungsnut 29 und trägt am Ende zwei Gleitstücke 36, von denen jedes in einer zugehörigen Nutenkammer 29 läuft.

Zum Betätigen des Dachfensterrollos 24 ist in der Rollobahn 22 mittig eine Grifföffnung 37 vorhanden, die an den Zugstab 23 angrenzt.

Das von dem Zugstab 23 abliegende Ende der Rollobahn 22 ist an einer Wickelwelle 38 befestigt.

Die Wickelwelle 38 ist neben dem rückwärtigen Ende der beiden Führungsschienen 25 und 26 - bezogen auf die gewohnten Bezeichnungen bei Fahrzeugen - unterhalb des Daches mit Hilfe von Zapfen 39 drehbar gelagert. In der üblichen Weise ist die Wickelwelle 38 rohrförmig und enthält in ihrem Inneren einen schematisch angedeuteten Federmotor 41, der von einer Schraubenzugfeder 42 gebildet ist, die bei 43 an der Innenseite des die Wickelwelle 38 darstellenden Rohrs befestigt ist und am anderen Ende mit dem rechten Zapfen 39, der in der Karosserie drehfest festgelegt ist.

Mit Hilfe des Federmotors 41 wird die Wickelwelle 38 im Sinne eines Aufwickelns der Rollobahn 22 auf die Wickelwelle 38 vorgespannt und somit die erforderliche Zugspannung in der Rollobahn 22 aufrecht erhalten.

An demjenigen Ende, das der Wickelwelle 38 benachbart ist, ist jede der beiden Führungsschienen 25, 26 mit einer schraubenförmig verlaufenden Einlaufkante 45 versehen. Die Einlaufkante 45 entsteht, indem die betreffende Führungsschiene 25, 26 von der dem Betrachter zugekehrten Seite her bis etwa auf die Mitte der Führungskammer 29 abgetragen wird. In dem Bereich zwischen der Einlaufkante 45 und dem der Wickelwelle 38 benachbarten Ende ist somit die Schlitzwand 31 sowie die Hälfte des Innenraums der Nutenkammer 29 und deren Rückwand 46 zu erkennen.

Die Einlaufkante 45 ist etwa schraubenförmig gestaltet, wobei dasjenige Ende 47 der Einlaufkante 45, das von der Rollobahn 22 am weitesten abliegt, der Wickelwelle 38 am nächsten benachbart ist, während dasjenige Ende 48 der Einlaufkante 45, das schließlich in dem Nutenschlitz 30 einmündet, von der Wickelwelle 38 weiter abliegt.

Ferner gehören zu dem Dachfensterrollo 24 zwei runde Kederglieder 49 und 51, deren Durchmesser etwas kleiner ist als der Durchmesser der Nutenkammer 29. Die beiden Kederglieder 49 und 51 sind biegeelastisch und haben vorzugsweise eine raue, bürstenartige Oberfläche, die beispielsweise von einer Vielzahl feiner Haare oder Borsten gebildet ist. Die Kederglieder 49, 51 sind im Rahmen der hier auftretenden Kräfte hinreichen zug- und drucksteif und auch torsionsfest. Sie sind im Übrigen so gestaltet, dass sie, vorgeschoben in die Nutenkammer 29, auf keinen Fall seitlich durch den Nutenschlitz 30 herausgezogen oder herausgepresst werden können. Im einfachsten Falle handelt es sich um einen entsprechend dicken Polymerdraht.

Das vordere Ende der Kederglieder 49 und 51 ist, wie dies im aufgebrochenen Bereich gezeigt ist, mit Hilfe eines Niets 52 zug- und druckfest mit dem Gleitstück 6 verbunden, das beispielsweise die Gestalt eines Rohrs hat, in das das Kederglied 49 hineinpasst.

. Außerhalb der Führungsschienen 25, 26 werden die beiden Kederglieder 49 und 51 in Speicherrohren 52 und 53 geführt. Die Speicherrohre 52, 53 können biegsame Schläuche aus Elastomermaterial oder auch fest verlegte Aluminiumrohre sein.

Als wesentliches Element kommt bei dem neuen Dachfensterrollo 24 das Merkmal hinzu, dass der Zuschnitt der Rollobahn 22 breiter ist als es der lichten Weite zwischen den beiden Führungsschienen 25, 26 entspricht. Die genaue Breite der Rollobahn ergibt sich aus der nachfolgenden Funktionsbeschreibung.

Durch entsprechende konstruktive Maßnahmen wird dafür gesorgt, dass sich das Fensterrollo 24 nur soweit öffnen lässt, bis eine an der Rollobahn vorgesehene Aussparung 54 in der Nähe des Zugstabs 23 aus der Sicht der Wickelwelle 38 kurz hinter dem Ende 48 der Einlaufkante 45 steht. Da die Rollobahn 22 breiter ist als der lichte Abstand zwischen den beiden Führungsschienen 25, 26 wird der seitlich überstehende Bereich der Rollobahn 22 durch die schraubenförmig verlaufende Einlaufkante 45 bei jeder Führungsschiene 25, 26 dazu gezwungen, sich um das betreffende Kederglied 59 bzw. 51 schraubenförmig herum zu legen, wie dies auf der linken Hälfte von Fig. 2 bei 55 gezeigt ist. Die Rollobahn 22 wird dort in eine Umbugstellung gezwungen. Hierdurch entsteht eine längs der Kante der Rollobahn 22 verlaufende schlauchförmige Schlaufe 56 mit einem anschließenden flachen Flanschabschnitt 57, der wieder aus dem Schlitz 30 austritt. Die schlauchförmige Umschlingung des Kederglieds 49 durch die schlauchförmige Schlaufe 56 ist oben rechts in Fig. 2 im aufgebrochenen Bereich der Führungsschiene 26 zu erkennen. Dort ist die Lage der Rollobahn 22 mit ihrem Verlauf veranschaulicht, den sie einnimmt, wenn dort die Führungsschiene 26 anstelle aufgebrochen zu sein, vollständig vorhanden wäre.

Der Benutzer kann, ausgehend von dieser Stellung des Dachfensterrollos 24, das Dachfensterrollo 24 schließen, indem er die an der Hinterkante 20 stehende Zugstange 23 im Bereich des Griffloches 37 erfasst und in Richtung auf die Vorderkante des Dachfensters 21 bewegt. Dabei wird die Rollobahn 22 zunehmend gegen die Wirkung des Federmotors 41 von der Wickelwelle 38 abgezogen. In dem Maße, in dem die Rollobahn 22 abgezogen wird, läuft sie mit ihren Seitenbereichen auch in die beiden Führungsschienen 25 und 26 ein. Mittels der dort vorhandenen schraubenförmig oder schräg verlaufenden Einlaufkanten 45 wird fortlaufend die oben beschriebene schlauchförmige Konfiguration im Seitenbereich der Rollobahn 22 erzeugt.

Da die beiden Kederglieder 49 und 51 mit ihrem betreffenden Ende mit dem zugehörigen Gleitstück 36 zug- und druckfest verbunden sind, werden sie synchron mit der Laufbewegung der Rollobahn 22 zunehmend in die beiden Führungsschienen 25 und 26 mit hineingezogen, so dass an jeder Stelle der entstehende Umbug durch ein Kederglied 49, 51 gefüllt ist.

Wenn das Dachfensterrollo 24 vollständig geschlossen ist, steht der Zugstab 23 am vorderen Ende des Dachfensters 21, d.h. in der Nähe der Frontscheibe 5. Die Rollobahn 22 ist über die gesamte Länge zwischen dem Zugstab 23 und dem distalen Ende 48 der Einlaufkante 45 an ihren beiden Seitenrändern umbugartig um nahezu 180° umgeschlagen.

Die Rollobahn 22 hat im Seitenbereich etwa die Gestalt eines Kleidersaums mit eingelegten Keder, allerdings mit dem Unterschied, dass der Saum nicht durch Nähte stabilisiert ist.

Im Bereich des Nutenschlitzes 30 und außerhalb der Führungsnut 27 liegt die Rollobahn 22, wie die Figuren erkennen lassen, doppellagig. Im Inneren der Führungsnut umschlingt sie das betreffende Kederglied 49 bzw. 51.

Die Umschlingung des Kederglieds 49, 51 sorgt dafür, dass es nicht möglich ist, die Rollobahn 22 quer zu der Führungsnut 27 aus dieser herauszuziehen. Die Reibung zwischen dem Kederglied 49, 51 und der darum herumliegenden Rollobahn 22 ist in der Lage solchen Kräften Stand zu halten. Bei entsprechendem Reibpaarung würde eher die Rollobahn 22 einreißen als dass sie herausziehbar wäre. Hinzu kommt, dass bei in radialer Richtung nachgiebigem Kederglied, beispielsweise durch Haare oder Borsten, die Rollobahn 22 gleichzeitig gegen die Seitenwand der Nutenkammer 29 angedrückt wird, was zusätzlich die Reibung erhöht.

Das erfindungsgemäße Dachfensterrollo 24 wird zufolge der an den Seitenkanten wirksamen Verankerung in der Mitte nicht durchhängen.

Es versteht sich, dass als Rollobahnmaterial nur solche Materialien in Frage kommen, die ohne zu reißen oder dauerhaft zu verknittern die Umbugbewegung an der Einlaufkante 45 mitmachen können. Hierzu sind jede Art von Kunststofffolien, Gewebe und Kettengewirke in der Lage.

Zum Öffnen schiebt der Benutzer die Zugstange 23 in Richtung auf die Wickelwelle 38. Hierbei werden die Kederglieder 49 und 51, die hinreichend drucksteif sind, aus den beiden Führungsschienen 25, 26 zurückgeschoben und gleichzeitig wickelt der Federmotor 41 entsprechend die Rollobahn 22 auf der Wickelwelle 38 auf.

Die Reibung, die die Seitenränder der Rollobahn 22 in den Führungsschienen 25, 26 erfahren reicht aus, um den Federmotor 41 daran zu hindern, die Rollobahn 22 aufzuwickeln, wenn der Benutzer die Zugstange 23 loslässt. Spezielle Bremseinrichtungen sind bei der erfindungsgemäßen Anordnung nicht erforderlich.

In dem Maße in dem die Rollobahn aus der Führungsschiene 25, 26 frei kommt und die Einlaufkante 45 passiert, klappt sie aus der Umbugkonformation zurück in die ebene Konformation und legt sich flach und gestreckt, wie in der Zeichnung dargestellt, auf der Wickelwelle 38 bzw. dem Bereich darauf befindlichen Lagen aus Rollobahnmaterial ab.

Der Wickel aus Rollbahnmaterial, der beim Öffnen des Dachfensterrollos 24 entsteht ist glatt. An keiner Stelle liegt Material doppellagig.

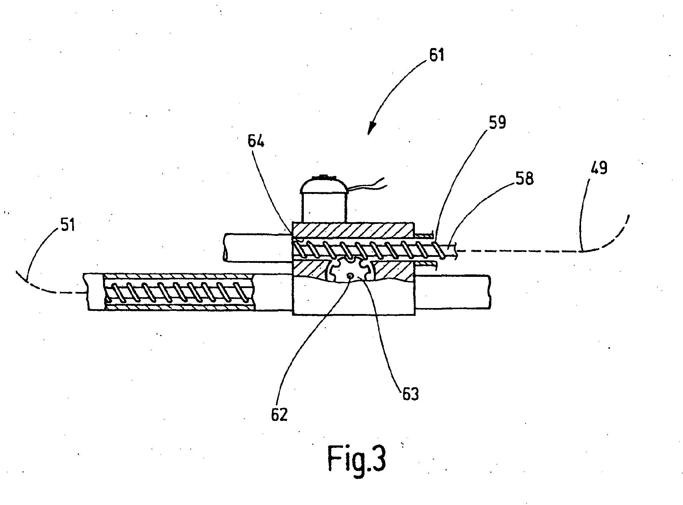

Vorstehend ist das Dachfensterrollo 24 als manuelles Rollo beschrieben. Es besteht auch die Möglichkeit das Dachfensterrollo 24 elektrisch zu betätigen. Hierzu genügt es, wenn die beiden Kederglieder 49 und 51, wie in Fig. 3 schematisch angedeutet, als schraubenverzahnte Zahnstangen ausgeführt sind. Sie setzen sich aus einer zylindrischen Seele 58 und einer darauf befestigten schraubenförmig verlaufenden Wendel 59 zusammen. Die Wendel 59 bildet eine Art endlos um die Seele 58 herumlaufenden Zahn, der eine insgesamt rundumverzahnte Zahnstange mit schräger Verzahnung entstehen lässt.

Zum Antrieb ist ein Getriebemotor 61 vorgesehen, auf dessen Ausgangswelle 62 ein Stirnzahnrad 63 drehfest sitzt. Das Zahnrad 63 trägt eine Stirnverzahnung, die zu der durch die Wendel 59 gebildeten Verzahnung komplementär ist.

Durch das Getriebegehäuse des Getriebemotors 61 führen tangential an dem Zahnrad 63 zwei gerade Durchgangsbohrungen 64 vorbei, die diametral sich bezüglich der Drehachse 62 gegenüberliegen. Durch je eine der beiden Bohrungen 64 läuft eines der Kederglieder 49 bzw. 51 hindurch. Indem das Ausgangszahnrad 63 in Umdrehungen versetzt wird, werden die beiden Kederglieder 49 und 51 entweder aus den Führungsschienen 25, 26 zurückgezogen oder in diese vorgeschoben. Dabei wird gleichzeitig der Zugstab 23 mitgenommen.

Es versteht sich, dass die beiden Kederglieder 49 und 51 bis zu dem Getriebemotor 61 in Führungsrohren knicksteif geführt sind.

Abgesehen davon, dass der Antrieb der Rollobahn 22 über die Kederglieder erfolgt, ist ansonsten die Funktionsweise hinsichtlich des Verhaltens der Rollobahn 22 beim Passieren der Einlaufkante 45 die Gleiche, wie oben ausführlich dargelegt.

Ein Dachfensterrollo weist zwei seitlich der Rollobahn verlaufende Führungsschienen auf. Der Zuschnitt der Rollobahn ist breiter als es der lichten Weite der Führungsschienen entspricht. Durch eine entsprechende Geometrie an der Einlaufseite der Führungsschienen wird die Rollobahn beim Ausziehen dazu gezwungen, innerhalb der Führungsschiene eine schlauchartige Schlaufe um ein mitlaufendes Kederglied zu bilden. Durch die Umschlingung des Kederglieds wird die Rollobahn quer zu der Längserstreckung der Führungsschiene arretiert.

## Patentansprüche

1. Fensterrollo (24) für Kraftfahrzeuge, insbesondere Dachfensterrollo (),
mit einer drehbar gelagerten Wickelwelle (38),
mit einer Rollobahn (22), die einen rechteckigen Zuschnitt aufweist und die mit einer Kante an der Wickelwelle (38) befestigt ist,
mit einem Zugstab (23), der an einer von der Wickelwelle (38) abliegenden Kante mit der Rollobahn (22) verbunden ist.
mit zwei Führungsschienen (25,26), die beidseits der aufgespannten Rollobahn (22) parallel zueinander verlaufen, und von denen jede eine hinterschnittene Führungsnut (27) enthält, deren Querschnitt sich aus einer Führungskammer (29) und einem Führungsschlitz (30) zusammensetzt, und
mit zwei zug- und druckfesten Kedergliedern (49,51), die im wesentlichen zylindrisch sind, von denen das eine in der Führungskammer (29) der einen Führungsschiene (25,26) und das andere in der Führungskammer (29) der anderen Führungsschiene (25,26) läuft und die mit dem Zugstab (23) entweder wenigstens zugfest oder wenigstens druckfest verbunden sind,
**dadurch gekennzeichnet dass**
jede Führungsschiene (25,26) an ihrem Ende, das der Wickelwelle (38) benachbart ist, eine Einlaufkante (45) bildet, die schräg zu der Längsachse der Führungsschiene (25,26) verläuft, und der
lichte Abstand der Führungsschienen (25,26) voneinander kleiner ist als die Breite der Rollobahn (22).

2. Vorrichtung nach Anspruch 1, **dadurch gekennzeichnet, dass** die Einlaufkante (45) einen schraubenförmigen Verlauf aufweist.

3. Vorrichtung nach Anspruch 1, **dadurch gekennzeichnet, dass** die Einlaufkante (45) an der Außenseite des Nutenschlitzes (30) beginnt und an dieser Stelle (48) den größten Abstand von der Wickelwelle (38) hat und dass die Einlaufkante (45) von diesem Punkt (48) in Richtung auf die Wickelwelle (38) und zu einer von dem Nutenschlitz (30) abliegenden Stelle (47) der Nutenkammer (29) verläuft, derart, dass in der Nähe der Wickelwelle (38) von dem Nutenschlitz (30) lediglich eine Seite (31) des Nutenschlitzes (30) und eine Hälfte der Nutenkammer (29) vorhanden ist.

4. Vorrichtung nach Anspruch 1, **dadurch gekennzeichnet, dass** das Kederglied (49,51) bezüglich der im Betrieb auftretenden Kräfte torsionssteif ist.

5. Vorrichtung nach Anspruch 1, **dadurch gekennzeichnet, dass** das Kederglied (49, 51) auf seinem Außenumfang rau ist.

6. Vorrichtung nach Anspruch 5, **dadurch gekennzeichnet, dass** die raue Oberfläche durch radial wegstehende Haare oder Borsten gebildet sind.

7. Vorrichtung nach Anspruch 1, **dadurch gekennzeichnet, dass** das Kederglied (49,51) einen Kreisquerschnitt aufweist.

8. Vorrichtung nach Anspruch 7, **dadurch gekennzeichnet, dass** der Außendurchmesser (49,51) des Kederglieds (49,51) in jedem Falle größer ist als die Weite des Nutenschlitzes (30).

9. Vorrichtung nach Anspruch 1, **dadurch gekennzeichnet, dass** die Kederglieder (49,51) Antriebsglieder für den Zugstab (23) bilden.

10. Vorrichtung nach Anspruch 1, **dadurch gekennzeichnet, dass** die Kederglieder (49,51) als biegeelastische Zahnstange ausgeführt sind.

11. Vorrichtung nach Anspruch 1, **dadurch gekennzeichnet, dass** die Kederglieder (49,51) eine rundum Verzahnung (59) aufweisen.

12. Vorrichtung nach Anspruch 10, **dadurch gekennzeichnet, dass** wenigstens ein Getriebemotor (61) vorhanden ist, auf dessen Ausgangswelle (62) ein Ausgangszahnrad (63) sitzt mit einer zu dem Kederglied (49,51) komplementären Verzahnung.

13. Vorrichtung nach Anspruch 1, **dadurch gekennzeichnet, dass** die Rollobahn (22) aus einem Material besteht, das ausgehend vom flachliegenden Zustand an seinem Randbereich durch eine kontinuierliche Umbugbewegung in einen Umbugzustand überführbar ist.

14. Vorrichtung nach Anspruch 1, **dadurch gekennzeichnet, dass** die Rollobahn (22) aus einer Kunststofffolie besteht.

15. Vorrichtung nach Anspruch 1, **dadurch gekennzeichnet, dass** die Rollobahn (22) aus einer begrenzt dehnbaren Kunststofffolie besteht.

16. Vorrichtung nach Anspruch 1, **dadurch gekennzeichnet, dass** die Rollobahn (22) eine Materialeigenschaft hinsichtlich des Biegeverhaltens ähnlich einem Gewebe aufweist.

17. Vorrichtung nach Anspruch 1, **dadurch gekennzeichnet, dass** die Führungsschiene (25,26) aus einem biegesteifen Material besteht oder biegesteif in dem Fahrzeug befestigt ist.

18. Vorrichtung nach Anspruch 1, **dadurch gekennzeichnet, dass** die Führungsschiene (25,26) im Bereich der Führungsnut (27) nicht aufweitbar ist.

19. Vorrichtung nach Anspruch 1, **dadurch gekennzeichnet, dass** die Führungskammer (29) einen Kreisquerschnitt aufweist.

20. Vorrichtung nach Anspruch 1, **dadurch gekennzeichnet, dass** der Zugstab (23) endseitig in den Führungsschienen (25,26) formschlüssig geführt ist.

## Claims

1. Window roller blind (24) for motor vehicles, in particular a roof window blind,
with a rotatably mounted winding shaft (38),
with a blind sheet (22), which has a rectangular blank and is fastened to the winding shaft (38) at one edge,
with a pull rod (23), which is connected to the blind sheet (22) at an edge remote from the winding shaft (38),
with two guide rails (25, 26), which run parallel to one another on both sides of the opened-out blind sheet (22), and each of which contains an undercut guide groove (27) with a cross-section configured from a guide chamber (29) and a guide slot (30), and
with two tension- and pressure-resistant edging members (49, 51), which are substantially cylindrical, of which one runs in the guide chamber (29) of one guide rail (25, 26) and the other runs in the guide chamber (29) of the other guide rail (25, 26) and which are connected to the pull rod (23) either in at least a tension-resistant manner or in at least a pressure-resistant manner,
**characterised in that**
at its end adjacent to the winding shaft (38) each guide rail (25, 26) forms a run-in edge (45), which runs obliquely to the longitudinal axis of the guide rail (25, 26), and the clearance between the guide rails (25, 26) is smaller than the width of the blind sheet (22).

2. Device according to claim 1, **characterised in that** the run-in edge (45) has a helical course.

3. Device according to claim 1, **characterised in that** the run-in edge (45) begins at the outer surface of the groove slot (30) and at this location (48) is at the greatest distance from the winding shaft (38), and that the run-in edge (45) runs from this point (48) in the direction of the winding shaft (38) and to a location (47) of the groove chamber (29) remote from the groove slot (30) in such a manner that of the groove slot (30) only one side (31) of the groove slot (30) and half the groove chamber (29) are in the vicinity of the winding shaft (38).

4. Device according to claim 1, **characterised in that** the edging member (49, 51) is torsion-resistant with respect to the forces arising during operation.

5. Device according to claim 1, **characterised in that** the edging member (49, 51) is rough on its outer periphery.

6. Device according to claim 5, **characterised in that** the rough surface is formed by radially projecting hairs or bristles.

7. Device according to claim 1, **characterised in that** the edging member (49, 51) has a circular cross-section.

8. Device according to claim 7, **characterised in that** the outside diameter (49, 51) of the edging member (49, 51) is in any case larger than the width of the groove slot (30).

9. Device according to claim 1, **characterised in that** the edging members (49, 51) form drive members for the pull rod (23).

10. Device according to claim 1, **characterised in that** the edging members (49, 51) are configured as a pliant toothed rack.

11. Device according to claim 1, **characterised in that** the edging members (49, 51) have a tooth system (59) all the way around.

12. Device according to claim 10, **characterised in that** at least one geared motor (61) is provided, on the output shaft (62) of which an output gearwheel (63) sits with a tooth system complementary to the edging member (49, 51).

13. Device according to claim 1, **characterised in that** the blind sheet (22) is made from a material, which starting from a flat lying state can be changed into a folded state by a continuous folding movement.

14. Device according to claim 1, **characterised in that** the blind sheet (22) is made from a plastic film.

15. Device according to claim 1, **characterised in that** the blind sheet (22) is made from a restrictedly stretchable plastic film.

16. Device according to claim 1, **characterised in that** the blind sheet (22) has a material property similar to a woven fabric with respect to its bending behaviour.

17. Device according to claim 1, **characterised in that** the guide rail (25, 26) is made from a bend-resistant material or is fastened in the vehicle in a bend-resistant manner.

18. Device according to claim 1, **characterised in that** the guide rail (25, 26) is not expandable in the region of the guide goove (27).

19. Device according to claim 1, **characterised in that** the guide chamber (29) has a circular cross-section.

20. Device according to claim 1, **characterised in that** the pull rod (23) is guided in a positive locking manner on the end side in the guide rails (25, 26).

## Revendications

1. Store à enrouleur pour fenêtre (24) destiné à des véhicules automobiles, en particulier store à enrouleur pour fenêtre de toit (),
comprenant un axe d'enroulement (38) monté tournant,
comprenant une bande de store (22) qui présente une coupe rectangulaire et qui est fixée par un bord à l'axe d'enroulement (38),
comprenant une barre de traction (23) qui est reliée à la bande de store (22) sur un bord éloigné de l'axe d'enroulement (38),
comprenant deux glissières (25, 26) qui s'étendent parallèlement l'une à l'autre, de part et d'autre de la bande de store (22) déroulée, et qui contiennent chacune une rainure de guidage (27) à contre-dépouille, dont la section transversale se compose d'une chambre de guidage (29) et d'une fente de guidage (30), et
comprenant deux éléments de renfort (49, 51) résistant à la traction et à la compression, qui sont sensiblement cylindriques et dont l'un coulisse dans la chambre de guidage (29) d'une glissière (25, 26) et l'autre coulisse dans la chambre de guidage (29) de l'autre glissière (25, 26) et qui sont reliés à la barre de traction (23) soit au moins de manière à résister à la traction, soit au moins de manière à résister à la compression,
**caractérisé en ce que**
chaque glissière (25, 26) forme, à son extrémité adjacente à l'axe d'enroulement (38), un bord d'entrée (45) qui s'étend en biais par rapport à l'axe longitudinal de la glissière (25, 26), et
l'écartement intérieur entre les glissières (25, 26) est inférieur à la largeur de la bande de store (22).

2. Dispositif selon la revendication 1, **caractérisé en ce que** le bord d'entrée (45) présente une forme hélicoïdale.

3. Dispositif selon la revendication 1, **caractérisé en ce que** le bord d'entrée (45) commence sur la face externe de la fente de rainure (30) et présente à cet endroit (48) la plus grande distance par rapport à l'axe d'enroulement (38), et **en ce que** le bord d'entrée (45) s'étend à partir de ce point (48) en direction de l'axe d'enroulement (38) et vers un endroit (47) de la chambre de rainure (29) qui est éloigné de la fente de rainure (30), de telle sorte que seuls un côté (31) de la fente de rainure (30) et une moitié de la chambre de rainure (29) sont présents dans le voisinage de l'axe d'enroulement (38).

4. Dispositif selon la revendication 1, **caractérisé en ce que** l'élément de renfort (49, 51) est rigide à la torsion par rapport aux forces apparaissant au cours du fonctionnement.

5. Dispositif selon la revendication 1, **caractérisé en ce que** l'élément de renfort (49, 51) est rugueux sur son pourtour extérieur.

6. Dispositif selon la revendication 5, **caractérisé en ce que** la surface rugueuse est formée par des poils ou des crins faisant saillie radialement.

7. Dispositif selon la revendication 1, **caractérisé en ce que** l'élément de renfort (49, 51) présente une section circulaire.

8. Dispositif selon la revendication 7, **caractérisé en ce que** dans tous les cas le diamètre extérieur (49, 51) de l'élément de renfort (49, 51) est supérieur à la largeur de la fente de rainure (30).

9. Dispositif selon la revendication 1, **caractérisé en ce que** les éléments de renfort (49, 51) constituent des éléments d'entraînement pour la barre de traction (23).

10. Dispositif selon la revendication 1, **caractérisé en ce que** les éléments de renfort (49, 51) sont réalisés sous forme de crémaillère élastique en flexion.

11. Dispositif selon la revendication 1, **caractérisé en ce que** les éléments de renfort (49, 51) présentent une denture (59) périphérique.

12. Dispositif selon la revendication 10, **caractérisé en ce qu'**il est prévu au moins un motoréducteur (61) sur l'arbre de sortie (62) duquel est montée une roue dentée de sortie (63) dotée d'une denture complémentaire de l'élément de renfort (49,51).

13. Dispositif selon la revendication 1, **caractérisé en ce que** la bande de store (22) est constituée d'une matière qui, partant de l'état disposé à plat dans sa zone de bord, peut être amenée dans un état incurvé par un mouvement de courbure continu.

14. Dispositif selon la revendication 1, **caractérisé en ce que** la bande de store (22) est constituée d'une feuille en matière plastique.

15. Dispositif selon la revendication 1, **caractérisé en ce que** la bande de store (22) est constituée d'une feuille en matière plastique présentant une extensibilité limitée.

16. Dispositif selon la revendication 1, **caractérisé en ce que** la bande de store (22) présente une propriété de matière concernant le comportement en flexion, qui est similaire à celle d'un tissu.

17. Dispositif selon la revendication 1, **caractérisé en ce que** la glissière (25, 26) est constituée d'un matériau rigide en flexion ou est fixée de manière rigide en flexion dans le véhicule.

18. Dispositif selon la revendication 1, **caractérisé en ce que** la glissière (25, 26) ne peut pas être élargie dans la région de la rainure de guidage (27).

19. Dispositif selon la revendication 1, **caractérisé en ce que** la chambre de guidage (29) présente une section circulaire.

20. Dispositif selon la revendication 1, **caractérisé en ce que** la barre de traction (23) est guidée côté extrémité par complémentarité de formes dans la glissière (25, 26).
